# EUROPEAN PATENT APPLICATION

(11) **EP 0 917 300 A2**
(43) Date of publication of application: **19.05.1999**
(21) Application number: 98307383.4
(22) Date of filing: 11.09.1998
(51) Int. Cl.: H04B 3/44

(54) **A branching unit for an underwater communications system**

(30) Priority: 24.10.1997 GB 9722560
(71) Applicant: ALCATEL, 75008 Paris (FR)
(72) Inventor: Nicol, George Wright, Brandram Road, London SE13 OAG (GB)
(74) Representative: Finnie, Peter John

(57) **Abstract**

A branching unit (10) for an underwater communications system is provided with a switching circuit (20,21,22) comprising a delay circuit (23) coupled between two terminations (12,13) for constraining the power routing configuration of the branching unit (10) in the presence of a shunt fault. Preferably, the delay circuit (23) is responsive to a rate of increase of an applied current, whereby the delay circuit (23) is only operative when the rate of increase of applied current is below a predetermined level.

## Description

### Field of the Invention

The present invention relates to a branching unit for an underwater communications system and in particular, a spur on spur (SOS) branching unit capable of handling a number of different shunt fault scenarios.

### Background of the Invention

The branching unit described in GB-A-2,287,625 provides remote switching for electrical power in which any two of three line terminations can be connected together in dependence upon a relative line voltage and a third line termination subsequently connected to a sea earth. This branching unit design is used extensively in submarine communications systems around the world.

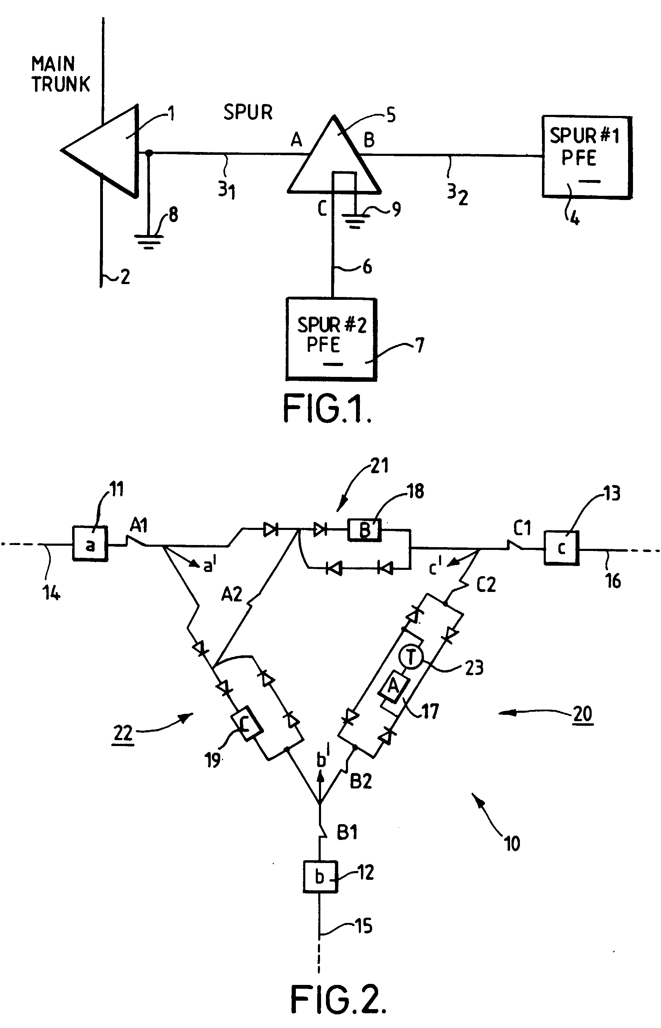

Figure 1 shows a portion of a submarine communications system comprising a branching unit 1 of the type described above connected to a main trunk 2 and having a primary spur 3 to a first land terminal station 4. The primary spur 3 includes a spur on spur (SOS) branching unit 5 providing a secondary spur 6 to a second land terminal 7. In the standard powering arrangement illustrated, the main trunk 1 is powered in the usual manner with the primary spur cable terminal connected to a sea earth 8. The first land terminal 4 is then powered up to the same sea earth 8 through the SOS branching unit 5, thereby placing a further sea earth 9 at the SOS branching unit 5. Finally, the second land terminal 7 is powered up to this sea earth 9. The SOS branching unit 5 acts symmetrically with respect to the two legs 3₁ and 3₂ of the primary spur so that the first land terminal 4 may negative end feed to the sea earth 9 at the SOS branching unit 5 and the second land terminal 7 to the sea earth 8 at the main trunk branching unit 1.

It has been found that a problem exists with this secondary spur arrangement when a shunt cable fault develops on one of the legs. If power is applied by one of the land terminals to the SOS branching unit 5 following the detection of a shunt fault in an attempt to isolate the faulty leg, the symmetrical nature of the branching unit 5 is such that the line current may switch into the faulty leg if it has a relatively low electrical impedance to a sea earth, leaving the undamaged leg without power.

It is important that any shunt cable fault is dealt with quickly without loss of traffic on the undamaged legs. It is particularly undesirable to have to reconfigure power routing at the main trunk branching unit 1 since this would cause significant financial loss for the system operator.

### Summary of the Invention

According to the present invention, a branching unit for an underwater communications system comprises:
three terminations, each for a different one of a corresponding number of line cables; and,
a switching circuit actuable to complete a current path between an appropriate pair of the terminations in dependence upon a relative line voltage,
wherein the switching circuit comprises a delay circuit coupled between two terminations for constraining the power routing configuration of the branching unit in the presence of a shunt fault.

The branching unit of the present invention is adapted to prevent switching current into a leg which has suffered a cable shunt fault and is particularly suited for use as a spur on spur branching unit.

Preferably, the switching circuit comprises three electrical relays each of which is actuable to complete a circuit path between an associated pair of terminations.

Preferably, the delay circuit comprises means for controlling the response of the switching circuit in the making of a connection between a predetermined pair of the terminations. More preferably, the delay circuit is responsive to a rate of increase of an applied current, whereby the delay circuit is only operative when the rate of increase of applied current is below a predetermined level. Most preferably, the switching circuit is arranged to favour the making of said connection in response to a rate of increase of applied current between the two terminations above a predetermined rate.

Preferably, the switching circuit is actuable to complete a current path between an appropriate pair of the three terminations in dependence upon a relative line voltage and comprises three electrical relays each forming one side of a delta network, each side of the delta network being connected between a different pair of the three terminations, and wherein the respective electrical relays in two of the sides of the delta network connected to a common one of the terminations are arranged so they are only actuable in response to a flow of current in the same direction relative to said common one of the terminations, the delay circuit being coupled within the remaining side of the delta network for controlling the response of the associated electrical relay relative to the other two electrical relays.

Preferably, the respective electrical relays in said two sides of the delta network are arranged so that they are only actuable in response to a positive potential difference between said common one of the terminations and a respective one of the other two of the terminations.

Preferably, each of said two sides of the delta network comprise a rectifier circuit which restricts the flow of current in one direction between the associated terminations.

Preferably, said remaining side of the delta network comprises a rectifier bridge network constructed around the associated electrical relay and delay circuit.

### Brief Description of the Drawings

An example of the present invention will now be described with reference to the accompanying drawings, in which:
Figure 1 shows a portion of a submarine communications system having a spur on spur branching unit providing a secondary spur to a land terminal;
Figure 2 shows a simplified delta network structure of an example of a branching unit in accordance with the present invention;
Figure 3 shows a simplified circuit diagram of the branching unit of Figure 2;
Figure 4 shows an example of a timing circuit for use in the branching unit of Figures 2 and 3; and,
Figures 5 to 7 illustrated a number of cable shunt fault scenarios.

### Detailed Description

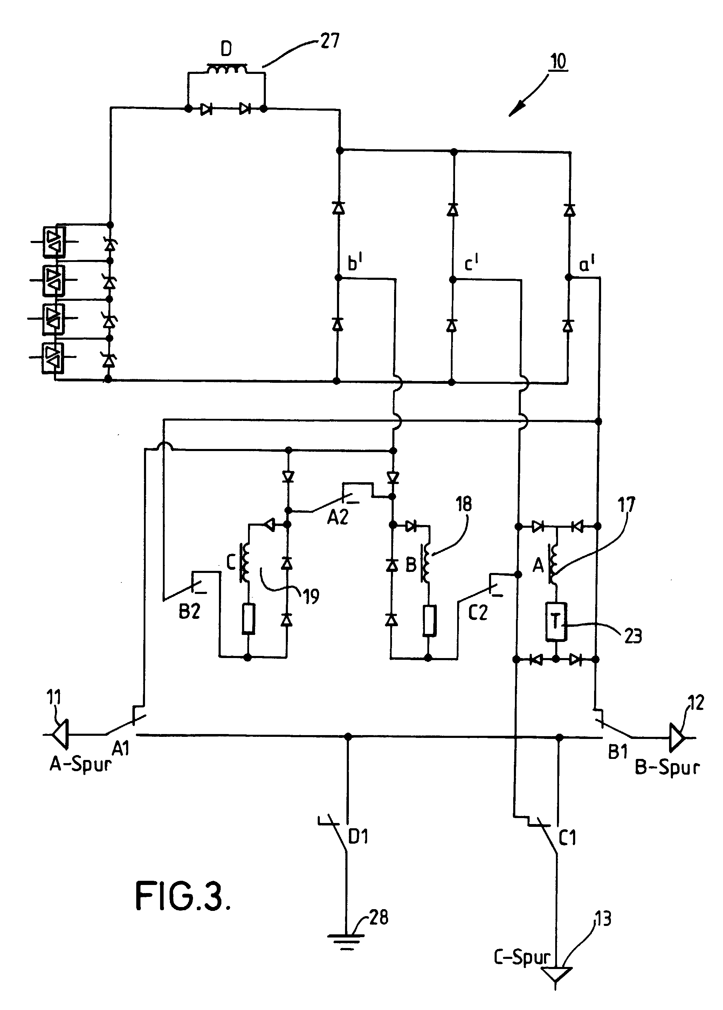

Figures 2 and 3 show simplified views of an example of a branching unit 10 in accordance with the present invention. The branching unit 10 includes three terminations 11 to 13 each for a different one of three line cables 14 to 16. The coils of three electrical relays 17 to 19 are provided in respective sides 20 to 22 of a delta network with each side of the delta network being connected between a different pair of the terminations. The electrical relays 18 and 19 in sides 21 and 22, respectively, are connected within an arrangement of rectifier diodes so that the coil of electrical relay 18 will only be energised by a flow of current from termination 11 to termination 13 and the coil electrical relay 19 will only be energised by a flow of current from termination 11 to termination 12. The remaining side 20 of the delta network includes a timing circuit 23 connected in series with the associated electrical relay 17 within a rectifier bridge circuit. As will be described in detail below, this renders the coil of electrical relay 17 less sensitive when line current is applied slowly, for example 1mAs⁻¹, thereby favouring the operation of one of the other two electrical relays 18 and 19, connected within the other sides 21 and 22 of the delta network, respectively.

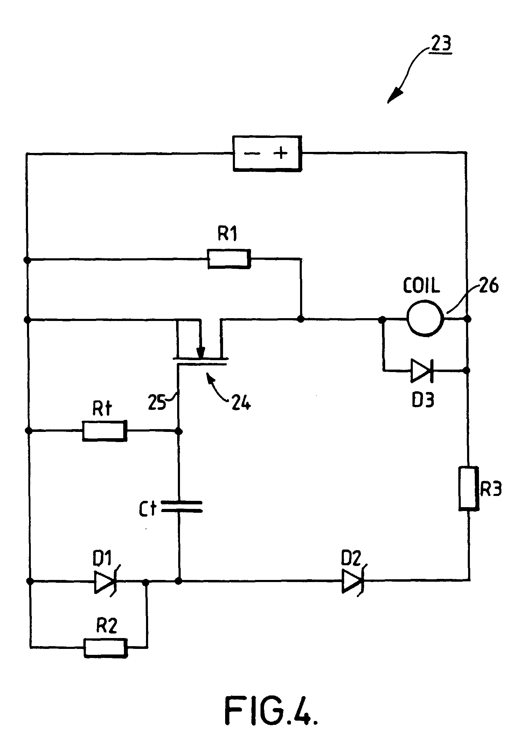

The timing circuit 23 shown in detail in Figure 4 comprises a field effect transistor (FET) 24 having a gate 25 which is biassed by a network Rt, Ct, R2, R3, D1 and D2.

This is arranged so that at the intended fast rate of rise of supply current, for example up to 20 mAs⁻¹, the gate 25 will be biassed strongly enough to turn the FET 24 on. Almost all of the available line voltage is applied to the relay coil 26, causing the relay 17 to pull in. The gate bias only persists for a short time after the initial rise of supply voltage, after which the FET 24 turns off. The resistance R1 provides a bypass path around the FET 24: its value is set to just maintain the minimum holding current through the relay coil 26 after the FET 24 turns off.

If the supply voltage rises more slowly insufficient gate bias is developed to turn the FET 24 on. The relay coil 26 receives some current via R1, but this will be insufficient to pull the relay in.

The branching unit 10 operates as follows: in the case of an earth fault on line cable 15, the power feed at the land terminal (not shown) connected to line cable 16 is controlled so that the line current level is increased sufficiently slowly for the timing circuit 23 to reduce the sensitivity of the electrical relay 17. The flow of current in the side 21 of the delta network energises the coil of the electrical relay 18 and so opens the normally closed relay switches B1 and B2 to isolate the line cable 15 and line termination 12. Continued powering activates a ground relay 27 and associated ground relay switch D1 in the usual manner to connect line termination 12 to a sea earth 28.

Operation of the electrical relay 17 is only made possible by a more rapid application of current along side 20 of the delta network between line terminations 12 and 13. Although either of the electrical relays 18 and 19 will also tend to be energised, the timing circuit 23 is arranged to pass more current through the electrical relay 17 than that which will pass through either of these relays.

In the above example, electrical relay 17 is only actuable in response to fast powering, so as not to be affected by the other two electrical relays 18 and 19 powering at a normal rate. However, as an alternative, electrical relay 17 could be arranged so that it is only actuable in response to prolonged powering, requiring fast powering for electrical relays 18 and 19. In this case, timing circuits would have to be provided in side 21 and 22 rather than in side 20.

A number of possible cable shunt faults will now be illustrated.

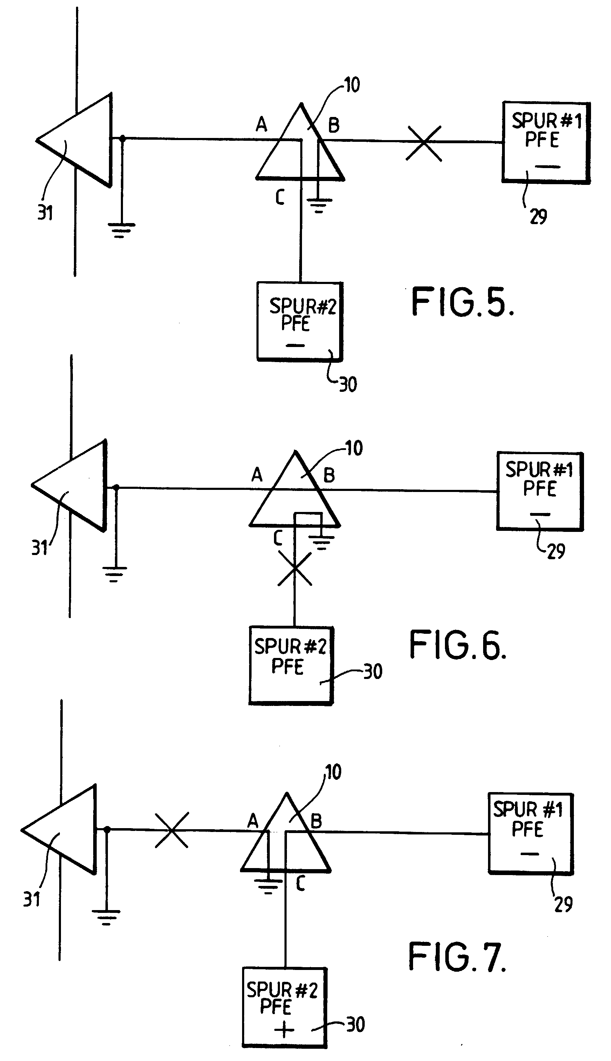

Figure 5 shows a situation where there is a fault on the primary spur between the SOS branching unit 10 and a first land terminal 29. As described above, in this scenario, the power feed on the second land terminal 30 must slow ramp to beyond the configuration point, thereby disconnecting the faulty leg. Powering after successful configuration may then continue as normal to connect a sea earth to the faulty leg.

Figure 6 shows a situation where there is a fault on the secondary spur. In this scenario, the power feed on the first land terminal 29 must slow ramp to beyond the configuration point, thereby disconnecting the faulty leg. Powering after successful configuration may then continue as normal to connect a sea earth to the faulty leg.

Figure 7 shows a situation where there is a fault on the primary spur between the main trunk branching unit 31 and the SOS branching unit 10. In this scenario, the first land terminal 29 double end feeds with the second land terminal 30 at a fast rate, maintaining a virtual earth at the SOS branching unit 10.

## Claims

1. A branching unit (10) for an underwater communications system comprising:
three terminations (11,12,13), each for a different one of a corresponding number of line cables (14,15,16); and,
a switching circuit (20,21,22) actuable to complete a current path between an appropriate pair of the terminations in dependence upon a relative line voltage,
wherein the switching circuit comprises a delay circuit (23) coupled between two terminations (12,13) constraining the power routing configuration of the branching unit (10) in the presence of a shunt fault.

2. A branching unit according to claim 1, in which the switching circuit comprises three electrical relays (17,18,19), each of which is actuable to complete a current path between an associated pair of terminations (11,12,13).

3. A branching unit according to claim 1 or 2, in which the delay circuit (23) comprises means for delaying the response of the switching circuit (20,21,22) in the making of a connection between a predetermined pair of the terminations (12,13).

4. A branching unit according to any preceding claim, in which the delay circuit (24) is responsive to a rate of increase of an applied current between the two terminations (12,13), whereby the delay circuit (23) only delays the response of the switching circuit (20,21,22) in the making of a connection between a predetermined pair of the terminations when the rate of increase of applied current is below a predetermined level.

5. A branching unit according to any of claim 3 or 4, in which the switching circuit (20,21,22) is arranged to favour the making of said connection in response to a rate of increase of applied current between the two terminations (12,13) above a predetermined rate.

6. A branching unit according to any preceding claim, in which the switching circuit (20,21,22) is actuable to complete a current path between an appropriate pair of the terminations (11,12,13) in dependence upon a relative line voltage and comprises three electrical relays (17,18,19) each forming one side of a delta network, each side of the delta network being connected between a different pair of the three terminations (11,12,13), wherein the respective electrical relays (18,19) in two of the sides (21,22) of the delta network connected to a common one of the terminations (11) are arranged so they are only actuable in response to a flow of current in the same direction relative to said one of the terminations (11), the delay circuit (23) being coupled within the remaining side (20) of the delta network for controlling the response of the associated electrical relay (17) relative to the other electrical relays (18,19).

7. A branching unit according to claim 6, in which the respective electrical relays (18,19) in said two sides (21,22) of the delta network are arranged so they are only actuable in response to a positive potential difference between said common one of the terminations (11) and a respective one of the other two of the terminations (12,13).

8. A branching unit according to claim 6 or 7, in which each of said two sides (21,22) of the delta network comprise a rectifier circuit which restricts the flow of current in one direction between the associated terminations.

9. A branching unit according to any of claims 6 to 8, in which said remaining side (20) of the delta network comprises a rectifier bridge network constructed around the associated electrical relay (17) and delay circuit (23).
